# FASCICULE DE BREVET EUROPEEN

(11) **EP 3 838 686 B1**
(45) Date de publication et mention de la délivrance du brevet: **16.03.2022**
(21) Numéro de dépôt: 20213500.0
(22) Date de dépôt: 11.12.2020
(51) Int. Cl.: B60R 16/033, B60R 16/037, B60H 1/00, H02J 7/34

(54) **CONVERTISSEUR DE TENSION COURANT CONTINU / COURANT CONTINU**
GLEICHSTROM-GLEICHSTROM-SPANNUNGSWANDLER
DIRECT CURRENT/ DIRECT CURRENT VOLTAGE CONVERTER

(30) Priorité: 17.12.2019 FR 1914691
(43) Date de publication de la demande: 23.06.2021
(73) Titulaire: Cats Power Design, 74370 Annecy (FR)
(72) Inventeur: EPPLER, Ambre, 69500 Bron (FR); MONTIBERT, Julien, 69550 Amplepuis (FR)
(74) Mandataire: Bouvier, Thibault

(56) Documents cités:
- DE-A1- 2 402 750
- DE-U1- 20 211 188
- DE-U1-202006 020 319
- GB-A- 2 395 375

## Description

### DOMAINE DE L'INVENTION

La présente invention concerne le domaine des convertisseurs courant continu / courant continu, plus communément appelé booster DC/DC par anglicisme, ou encore « accélérateur de charge », et appelé ci-après « convertisseur » par concision.

Le convertisseur selon invention est destiné aux véhicules automobiles, par exemple les véhicules de loisirs (notamment les camping-cars, vans, transformables, etc.), les ambulances et autres véhicules de secours, ci-après « véhicules automobiles » ou encore « véhicules » par concision, qui comprend une batterie principale.

Pour diminuer le niveau de pollution d'un véhicule automobile, il est recommandé d'éviter de solliciter l'alternateur trop souvent, ce que prévoit par exemple la norme dite Euro 6 et suivantes (Euro 7 etc.).

Dans ce contexte, il est prévu que pour un moteur donné, pour lequel il existe une valeur seuil maximale de courant Imax à ne pas dépasser, il existe également une valeur seuil de tension Vmin prédéterminée, enregistrée dans une mémoire, pour laquelle l'alternateur n'est sollicité pour la recharge de la batterie principale que lorsque la tension aux bornes de celle-ci est inférieure à ladite valeur seuil de tension Vmin.

Au sens de la présente invention, un véhicule automobile comprend également une batterie auxiliaire, qui peut être une batterie unique ou un ensemble de batteries, éventuellement de technologies différentes.

La batterie auxiliaire peut être sollicitée pour alimenter en énergie électrique certains accessoires du véhicule, non essentiels au démarrage ou au roulage de celui-ci, par exemple un réfrigérateur, une climatisation, un équipement de survie, une télévision, etc. GB 2395375 A divulgue une unité de commande pour un véhicule. DE 20211188 U1 divulgue une système électrique pour un véhicule.

Il existe un besoin d'optimisation de la consommation de courant au sein du réseau électrique d'un véhicule.

La présente invention permet de répondre à cette problématique

### RESUME DE L'INVENTION

Plus précisément, l'invention concerne selon un premier de ses objets, un convertisseur (100) de tension courant continu / courant continu, pour véhicule automobile (10), comprenant :
- Un boîtier (110),
- Un dispositif de conversion de tension (150),
- une entrée électrique, configurée pour être reliée électriquement à la batterie principale (20) du véhicule automobile (10), et permettant l'alimentation en courant du dispositif de conversion de tension (150) quand le moteur du véhicule automobile (10) est en marche,
- une entrée électrique, configurée pour être reliée électriquement à un secteur quand le moteur du véhicule automobile (10) est à l'arrêt, optionnellement via un convertisseur (100) courant alternatif / courant continu.

Il est essentiellement caractérisé en ce qu'il comprend en outre :
- une première sortie électrique, configurée pour être reliée électriquement à la batterie auxiliaire (30) du véhicule automobile (10), et
- une deuxième sortie électrique, distincte de la première sortie électrique, et configurée pour être reliée électriquement à un équipement électrique accessoire du véhicule automobile (10), et
- le boîtier (110) est équipé d'un ensemble d'au moins un interrupteur DIP.

On peut prévoir que le boîtier (110) est équipé d'un ensemble d'au moins un fusible (160), accessibles manuellement depuis l'extérieur du boîtier (110).

On peut prévoir que la position d'un interrupteur DIP correspond à un type respectif de réfrigérateur, et la position d'un autre interrupteur DIP correspond à un type respectif de batterie auxiliaire.

On peut prévoir un premier interrupteur (130), monté sur une ligne électrique configurée pour relier directement la batterie principale (20) et l'équipement accessoire (50) du véhicule automobile (10), sans passer par le dispositif de conversion de tension (150).

On peut prévoir que un deuxième interrupteur (140), monté sur une ligne électrique configurée pour relier directement la batterie auxiliaire (30) et l'équipement accessoire (50) du véhicule automobile (10), sans passer par le dispositif de conversion de tension (150).

On peut prévoir que au moins l'un parmi le premier interrupteur (130) et le deuxième interrupteur (140) est piloté par la valeur d'un signal (D+) représentatif de l'état de fonctionnement du moteur du véhicule automobile (10).

On peut prévoir que le boîtier (110) est exempt de ventilateur.

Selon un autre de ses objets, l'invention concerne un véhicule automobile (10) comprenant un convertisseur (100) selon l'invention, le véhicule comprenant une batterie principale (20), une batterie auxiliaire (30), un alternateur (40), et un équipement électrique accessoire.

On peut prévoir que l'équipement électrique accessoire est un réfrigérateur à gaz ou un réfrigérateur à compression.

On peut prévoir en outre un convertisseur (100) courant alternatif / courant continu, relié électriquement au convertisseur (100) selon l'invention.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

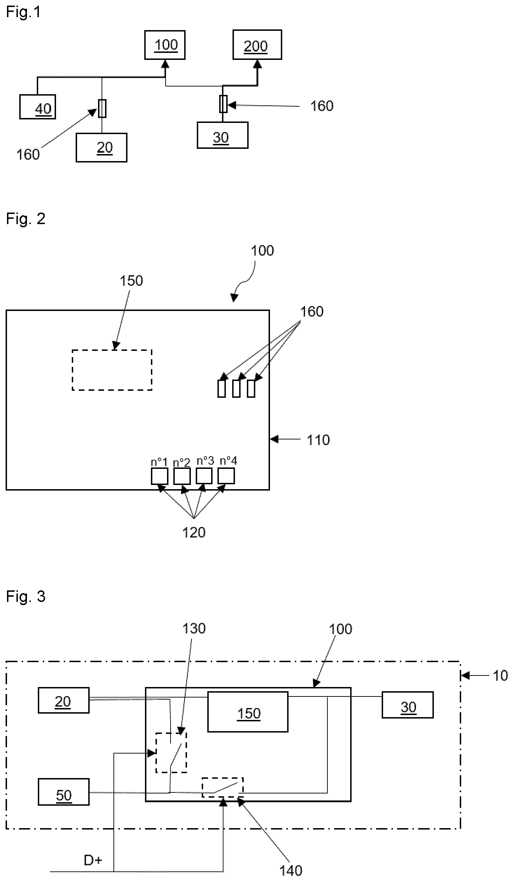

- Fig. 1 illustre un réseau électrique d'un véhicule automobile équipé d'un convertisseur selon l'invention,
- Fig. 2 illustre un mode de réalisation d'un convertisseur selon l'invention, et
- Fig. 3 illustre un véhicule automobile équipé d'un convertisseur selon l'invention.

### DESCRIPTION DETAILLEE

Au sens de la présente invention, un véhicule automobile 10 comprend :
- un moteur thermique, et optionnellement un moteur électrique,
- une batterie principale 20,
- une batterie auxiliaire 30, et
- un alternateur 40.

Un véhicule au sens de la présente invention peut donc également être un véhicule hybride.

La batterie principale 20 est une batterie unique ou un ensemble de batteries. Elle est également appelée batterie de démarrage et permet notamment d'alimenter en énergie électrique le démarreur et les principaux éléments électriques du véhicule, par exemple les feux, la radio, etc.

La batterie auxiliaire 30 permet d'alimenter en énergie électrique un ensemble d'éléments électriques accessoires ou secondaires du véhicule.

L'alternateur 40 a pour but de fournir du courant à l'ensemble du réseau électrique du véhicule via la batterie principale 20 de celui-ci. Pour créer de l'électricité et recharger la batterie principale 20, il utilise la force du moteur thermique lorsque celui-ci est en marche. Au sens de la présente description, on entend indistinctement « en marche » et « en fonctionnement ».

L'alternateur 40 fournit ainsi de l'énergie électrique au moteur via la batterie principale 20 ainsi qu'aux accessoires tels que les éclairages, le chauffage, la climatisation, etc. Dans l'alternateur 40, une bobine de cuivre est enroulée autour d'un aimant. Quand le moteur est en marche, il fait tourner cette bobine par le biais d'une courroie, et produit ainsi un courant électrique.

Quand un véhicule est à l'arrêt moteur, certains de ses équipements électriques doivent rester sous tension (par exemple une alarme, une horloge, un système de verrouillage centralisé, etc.) et sont alors alimentés par la batterie principale 20. Chacun de ces équipements électriques consomme une intensité de courant inférieure à une valeur seuil respective prédéterminée, de sorte à ce que la batterie principale 20 ne se décharge qu'au bout de plusieurs jours / semaines d'inactivité du véhicule.

En revanche, lorsque le véhicule roule, c'est à dire lorsque le moteur est en marche, l'énergie électrique nécessaire au moteur et à ses accessoires est fournie par l'alternateur 40, qui recharge également la batterie principale 20.

Toutefois, certains véhicules sont équipés d'équipements électriques accessoires qui doivent rester sous tension mais dont la puissance électrique, indistinctement l'intensité du courant consommé, est supérieure à la valeur seuil prédéterminée. Aussi si de tels d'équipements électriques accessoires sont alimentés uniquement par la batterie principale 20, celle-ci se vide rapidement, ce qui peut compromettre un démarrage ultérieur du véhicule. C'est pourquoi certains véhicules sont équipés en outre d'une batterie auxiliaire 30 sur laquelle sont branchés de tels d'équipements électriques accessoires, avec un relais protégeant la batterie principale 20.

De tels équipements accessoires sont par exemple : un réfrigérateur (pour denrées alimentaires ou matériel médical, notamment les vaccins), le réfrigérateur pouvant être à absorption ou à compression, une glacière électrique, un équipement de communication, une armoire chauffante, une couveuse, une table ou un brancard électrique pour les véhicules de secours, etc.

Par souci de commodité dans la présente description ces équipements sont appelés « équipements accessoires ». Par souci de concision, seul le cas où l'équipement accessoire 50 est un réfrigérateur sera décrit ici.

À ce jour il existe essentiellement deux types de réfrigérateurs pour véhicules : les réfrigérateurs à compression et les réfrigérateurs à absorption de gaz, dits « réfrigérateurs à absorption ».

Un réfrigérateur à absorption fonctionne de la manière suivante : il se charge en énergie électrique sur la batterie principale 20 via l'alternateur 40 quand le moteur du véhicule est en fonctionnement ; et se charge en énergie électrique grâce à un système de gaz ou une alimentation électrique sur secteur quand le moteur du véhicule est à l'arrêt.

Un réfrigérateur à compression fonctionne de la manière suivante : il se charge également en énergie électrique sur la batterie principale 20 via l'alternateur 40 quand le moteur du véhicule est en fonctionnement ; mais quand le moteur du véhicule est à l'arrêt, un réfrigérateur à compression se charge en énergie électrique grâce à la batterie auxiliaire 30 du véhicule.

Il existe généralement en effet un interrupteur, intégré au réfrigérateur à compression et qui coupe l'alimentation électrique dudit réfrigérateur à compression à partir de la batterie principale 20 quand le moteur du véhicule est à l'arrêt, afin de préserver le niveau de charge de celle-ci.

Quel que soit le type de réfrigérateur, il est souhaitable que celui-ci soit alimenté en énergie électrique en continu.

L'alimentation en énergie électrique en continu d'un équipement accessoire 50 tel qu'un réfrigérateur à absorption ou un réfrigérateur à compression peut être mise en œuvre grâce à un convertisseur 100 selon l'invention, qui se présente sous forme de boîtier 110.

On peut même prévoir un convertisseur 100 adaptable à un réfrigérateur à compression et à un réfrigérateur absorption.

A cet effet, on peut prévoir que le convertisseur 100 est équipé d'un dispositif de commutation 120 qui permet notamment de sélectionner sélectivement le type de réfrigérateur à compression ou à absorption, la sélection d'un type de réfrigérateur ou de l'autre type de réfrigérateur venant préconfigurer le convertisseur 100.

Par exemple, le dispositif de commutation 120 comprend un ensemble de commutateurs, en l'espèce manuels, et plus particulièrement un ensemble d'interrupteur DIP pour « Dual In-line Package » en anglais.

Dans un mode de réalisation, on prévoit que le dispositif de commutation 120 comprend 4 interrupteurs DIP, respectivement numérotés de 1 à 4.

En l'espèce, la combinaison des positions ON / OFF des interrupteurs DIP n°1 et n°2 permet de couvrir 4 situations différentes :
- DIP n°1 sur ON et DIP n°2 sur ON ;
- DIP n°1 sur ON et DIP n°2 sur OFF ;
- DIP n°1 sur OFF et DIP n°2 sur ON ;
- DIP n°1 sur OFF et DIP n°2 sur OFF.

Chacune de ces combinaisons permet avantageusement de correspondre à un type respectif de batterie auxiliaire, par exemple respectivement Lithium, acide, gel et plomb (AGM).

En l'espèce, la position de l'interrupteur DIP n°3 correspond à un type respectif de réfrigérateur. Par exemple, DIP n°3 sur ON correspond à un réfrigérateur à absorption et DIP n°3 sur OFF correspond à un réfrigérateur à compression.

De manière plus générale, l'interrupteur DIP n°3 peut adopter deux positions dont l'une correspond à équipement accessoire 50 dont la consommation moyenne est supérieure à une valeur seuil prédéterminée VSMAX, et dont l'autre correspond à un équipement accessoire 50 dont la consommation moyenne est inférieure à une valeur seuil prédéterminée VSMIN.

Par exemple, DIP n°3 sur ON correspond à un équipement accessoire 50 dont la consommation moyenne est supérieure à la valeur seuil prédéterminée VSMAX et DIP n°3 sur OFF correspond à un équipement accessoire 50 dont la consommation moyenne est inférieure à la valeur seuil prédéterminée VSMIN. Les valeurs VSMAX et VSMIN peuvent être identiques.

Enfin, la position de l'interrupteur DIP n°4 correspond à l'existence ou l'absence d'un signal D+ accessible directement sur le véhicule. Par exemple, DIP n°4 sur ON correspond à un véhicule pour lequel le signal D+ est directement accessible, et DIP n°4 sur OFF correspond à un véhicule pour lequel le signal D+ est calculé.

Par exemple, on prévoit de calculer le signal D+ par une fonction mathématique de la valeur de la tension aux bornes de la batterie principale 20. En l'espèce, on prévoit que si la tension aux bornes de la batterie principale 20 est supérieure à une première valeur seuil VS1, alors on considère que le moteur tourne, ce qui équivaut à un signal D+ égal à 1 ; et que si la tension aux bornes de la batterie principale 20 est inférieure à une deuxième valeur seuil VS2, alors on considère que le moteur est à l'arrêt ou dans un fonctionnement pour lequel il n'est pas souhaitable de prélever de l'énergie sur la batterie principale, ce qui équivaut à un signal D+ égal à 0. De préférence, la valeur de la deuxième valeur seuil VS2 est différente de celle de la première valeur seuil VS1.

Ci-après, on considère indistinctement un signal D+ préexistant ou calculé, qui est un signal binaire représentatif de l'état de fonctionnement du moteur.

On peut prévoir que le convertisseur 100 comprend un dispositif de conversion de tension 150, configuré pour abaisser la tension du secteur, par exemple 220V ou 110V, sur lequel le véhicule est branché à l'arrêt moteur, en une basse tension utilisée dans le réseau électrique du véhicule, par exemple 24V ou 12V. On peut prévoir à cet effet un convertisseur AC/DC 200 relié électriquement en entrée au secteur et en sortie au convertisseur 100 DC/DC selon l'invention.

Ainsi, lorsque le véhicule est à l'arrêt et que le convertisseur 100 est branché sur secteur, le dispositif de conversion de tension 150 permet d'alimenter tout équipement accessoire 50, par exemple le réfrigérateur, une télévision ou tout autre équipement électrique ou électronique, comme de recharger la batterie auxiliaire 30 mais pas la batterie principale 20 pour des raisons de sécurité.

Le convertisseur 100 selon l'invention comprend une entrée électrique, configurée pour être reliée électriquement à la batterie principale 20 pour son alimentation en courant quand le moteur est en marche.

Avantageusement, le convertisseur 100 selon l'invention comprend une double sortie électrique, dont l'une est configurée pour être reliée électriquement à la batterie auxiliaire 30, et l'autre est configurée pour être reliée électriquement au réfrigérateur.

De préférence, le boîtier 110 du convertisseur 100 est exempt de ventilateur, il est ainsi avantageusement silencieux et économise le courant de fonctionnement d'un tel ventilateur.

De préférence, le boîtier 110 du convertisseur 100 comprend un matériau ou un ensemble de matériaux haute résistance, qui résiste aux vibrations et à l'humidité.

Avantageusement, le boîtier 110 du convertisseur 100 comprend un ensemble d'au moins un fusible 160, de préférence accessibles manuellement depuis l'extérieur du boîtier 110. En particulier, on prévoit au moins l'un des fusibles 160 suivants : un fusible 160 entre le convertisseur 100 et la batterie principale 20, et un fusible 160 entre le convertisseur 100 et la batterie auxiliaire 30.

Les fusibles 160 permettent de protéger le convertisseur 100 des courants parasites qui pourraient venir du réfrigérateur ou de la batterie auxiliaire 30.

En l'espèce, le convertisseur 100 se présente sous forme de boîtier 110 et chaque fusible 160 de l'ensemble de fusibles 160 est accessible manuellement individuellement par l'extérieur dudit boîtier 110.

Avantageusement, le boîtier 110 du convertisseur 100 comprend également une entrée configurée pour être reliée électriquement au signal de fonctionnement du moteur, dit signal D+. Lorsque le moteur est éteint, la consommation résiduelle du convertisseur 100 est ainsi quasi nulle (<0.25 mA).

Le convertisseur 100 selon l'invention comprend un premier interrupteur 130, où par « interrupteur » on entend tout dispositif de commutation 120 connu.

Le premier interrupteur 130 est piloté par la valeur du signal D+, et monté directement entre la batterie principale 20 et l'équipement accessoire 50, avantageusement sans passer par le dispositif de conversion de tension 150.

Le convertisseur 100 selon l'invention comprend également un deuxième interrupteur 140.

Le deuxième interrupteur 140 est piloté par la valeur du signal D+, et monté directement entre la batterie auxiliaire 30 et l'équipement accessoire 50, avantageusement sans passer par le dispositif de conversion de tension 150.

La batterie auxiliaire 30 est reliée électriquement à la batterie principale 20 par le dispositif de conversion de tension 150.

### Fonctionnement

1. Avec DIP n°3 sur ON, en l'espèce avec un réfrigérateur à absorption.

### 1.1 Moteur à l'arrêt

Lors d'un arrêt moteur, le convertisseur 100 ouvre le premier interrupteur 130, de sorte que l'équipement accessoire 50 ne peut plus être alimenté par la batterie principale 20.

### 1.1.1 Avec alimentation secteur

Avec un moteur à l'arrêt, l'alimentation électrique des équipements du véhicule peut être faite par un réseau électrique lorsque le véhicule est branché sur une prise secteur.

Dans ce cas, la tension du secteur est convertie par le dispositif de conversion de tension 150 du convertisseur 100 et distribuée au réseau électrique du véhicule. C'est par exemple le cas d'un véhicule de loisir branché sur une prise secteur sur une aire de loisirs, camping, etc.

Le premier interrupteur 130 et le deuxième interrupteur 140 sont ouverts, de sorte que l'équipement accessoire 50 ne peut être alimenté en énergie électrique ni par la batterie principale 20, ni par la batterie auxiliaire 30.

### 1.1.2 Sans alimentation secteur

Il peut arriver que le véhicule soit à l'arrêt moteur sans possibilité de se connecter à un réseau électrique.

Dans ce cas, l'alimentation électrique des équipements accessoires 50 n'est pas faite.

Toutefois, notamment pour des situations d'urgence, on peut prévoir un régime forcé qui ferme le deuxième interrupteur 140, de sorte que l'équipement accessoire 50 soit alimenté en énergie électrique par la batterie auxiliaire 30. En l'espèce, le régime forcé est activé par ar un bouton poussoir.

### 1.2 Moteur en fonctionnement

Avec un moteur en fonctionnement, le premier interrupteur 130 est fermé et le deuxième interrupteur 140 est ouvert, de sorte que l'équipement accessoire 50 est alimenté en énergie électrique exclusivement par la batterie principale 20 via l'alternateur

Selon invention, la batterie auxiliaire 30 se recharge également sur la batterie principale 20 via le convertisseur 100. Cependant, contrairement à l'art antérieur, l'équipement accessoire 50 se recharge directement sur la batterie principale 20 sans passer par le dispositif de conversion. À cet effet, le premier interrupteur est fermé.

Ainsi selon l'invention, contrairement aux solutions existantes, la batterie auxiliaire 30 n'est jamais utilisée pour l'alimentation électrique d'un réfrigérateur à absorption, c'est-à-dire pour un équipement accessoire 50 dont la consommation moyenne est supérieure à la valeur seuil prédéterminée VSMAX.

2. Avec DIP n°3 sur OFF, en l'espèce avec un réfrigérateur à compression.

### 2.1 Moteur à l'arrêt

Pour un réfrigérateur à compression (déclaré par la position du DIP n°3) : quand le moteur du véhicule s'arrête, le signal D+ passe à 0, le deuxième interrupteur 140 du convertisseur selon l'invention bascule (se ferme), de sorte à ce que l'équipement accessoire 50 est alimenté en énergie électrique par la batterie auxiliaire 30.

### 2.1.1 Avec alimentation secteur

### 2.1.2 Sans alimentation secteur

### 2.2 Moteur en fonctionnement

Comme précédemment, avec un moteur en fonctionnement, le premier interrupteur 130 est fermé et le deuxième interrupteur 140 est ouvert, de sorte que l'équipement accessoire 50 est alimenté en énergie électrique exclusivement par la batterie principale 20 via l'alternateur

Selon invention, la batterie auxiliaire 30 se recharge également sur la batterie principale 20 via le convertisseur 100. Cependant, contrairement à l'art antérieur, l'équipement accessoire 50 se recharge directement sur la batterie principale 20 sans passer par le dispositif de conversion. À cet effet, le premier interrupteur est fermé.

Ainsi selon l'invention, la batterie auxiliaire 30 n'est utilisée pour l'alimentation électrique d'un réfrigérateur à absorption, c'est-à-dire pour un équipement accessoire 50 dont la consommation moyenne est inférieure à la valeur seuil prédéterminée VSMIN, que lorsque le moteur est à l'arrêt.

### Exemples

Les valeurs ci-dessous sont données à titre purement illustratif et ne sont pas limitatives. Par exemple, un véhicule est équipé d'un équipement accessoire 50 tel qu'un réfrigérateur.

Un réfrigérateur à absorption consomme en moyenne 10 à 20 Ah ; et un réfrigérateur à compression consomme en moyenne de 4 ou 5 Ah.

Pour l'exemple, on considère un réfrigérateur à absorption consommant en moyenne 13 Ah.

Avec un convertisseur 100 de l'art antérieur, par exemple de 40 Ah, alors le courant disponible pour la recharger la batterie auxiliaire 30 n'est donc non pas 40 Ah mais seulement 40 Ah - 13 Ah = 27 Ah. Ce courant de charge peut également être diminué par d'autres facteurs, notamment la température.

Pour répondre à ce problème il conviendrait de fabriquer des convertisseurs plus puissants, ce qui pose des problèmes économiques notamment de coûts de fabrication.

En outre, il peut exister des contraintes techniques, notamment de distribution de la puissance électrique, des contraintes réglementaires ou normatives qui limitent le courant en entrée du convertisseur 100, par exemple une interdiction de dépasser un courant de 50 Ah à bord d'un véhicule automobile 10.

La présente invention permet de répondre à ce problème.

À cet effet, le convertisseur 100 selon invention comprend :
- une première entrée, configurée pour être reliée électriquement à la batterie principale 20,
- une deuxième entrée, configurée pour être reliée électriquement à la batterie auxiliaire 30, et telle que la charge de la batterie auxiliaire 30 peut être effectuée par la batterie principale 20 via le dispositif de conversion de tension 150 du convertisseur 100,
- une troisième sortie, configurée pour être reliée électriquement à un réfrigérateur et dont l'entrée est reliée électriquement à la batterie principale 20 via le premier interrupteur 130 sans conversion de tension ; ou à la batterie auxiliaire 30 via le deuxième interrupteur 140 sans conversion de tension.

Par exemple, avec un convertisseur 100 selon invention, on peut avoir une troisième sortie limitée à un courant inférieur à 18 Ah, et une deuxième sortie limitée à un courant inférieur ou égal à 25 Ah.

Grâce à cette configuration, le convertisseur 100 selon invention est limité par la valeur du courant maximal sur sa première sortie ou sur sa deuxième sortie, en l'espèce 25 Ah mais permet de délivrer un courant cumulé égal à la somme du courant délivré sur sa première sortie et sur sa deuxième sortie, en l'espèce 18 A h+ 25 Ah = 43 Ah.

En outre, comme un réfrigérateur consomme en réalité un courant dont la valeur est inférieure à 18 Ah, la sortie correspondante du convertisseur 100 selon l'invention peut être utilisée pour alimenter en énergie électrique un autre équipement accessoire 50 ou d'autres équipements accessoires, sous réserve que la consommation cumulée de l'ensemble des équipements accessoires soit inférieure à la valeur seuil, en l'espèce de 18 Ah.

Le convertisseur 100 selon invention présente un bornier multi sorties, dont une prise électrique est par exemple dédiée à un réfrigérateur, quel que soit le type de celui-ci.

Pour des raisons d'autonomie du véhicule, il est souhaitable que la batterie auxiliaire 30 soit chargée de plus vite possible.

L'invention n'est pas limitée aux équipements accessoires tels que les réfrigérateurs. On peut prévoir comme équipement accessoire 50 : un équipement de survie, tout matériel électrique ou électronique à ayant besoin d'être alimenté en énergie électrique en continu, éventuellement aux dépens de la batterie principale 20.

Dans un autre mode de réalisation, on prévoit un convertisseur 100 spécifique pour un réfrigérateur à compression, et un autre convertisseur 100 spécifique pour un réfrigérateur à absorption ; ce qui a l'avantage de ne pas nécessiter de commutateur pour sélectionner le type de réfrigérateur.

### Nomenclature

- 10: Véhicule automobile
- 20: batterie principale
- 30: batterie auxiliaire
- 40: alternateur
- 50: équipement accessoire
- 100: Convertisseur DC/DC
- 110: boîtier
- 120: dispositif de commutation (DIP)
- 130: premier interrupteur
- 140: deuxième interrupteur
- 150: dispositif de conversion de tension
- 160: Fusible
- 200: Convertisseur AC/DC

## Revendications

1. Convertisseur (100) de tension courant continu / courant continu, pour véhicule automobile (10), comprenant :
- Un boîtier (110),
- Un dispositif de conversion de tension (150),
- une entrée électrique, configurée pour être reliée électriquement à la batterie principale (20) du véhicule automobile (10), et permettant l'alimentation en courant du dispositif de conversion de tension (150) quand le moteur du véhicule automobile (10) est en marche,
- une entrée électrique, configurée pour être reliée électriquement à un secteur quand le moteur du véhicule automobile (10) est à l'arrêt, optionnellement via un convertisseur (100) courant alternatif / courant continu,
- une première sortie électrique, configurée pour être reliée électriquement à la batterie auxiliaire (30) du véhicule automobile (10), et
- une deuxième sortie électrique, distincte de la première sortie électrique, et configurée pour être reliée électriquement à un équipement électrique accessoire du véhicule automobile (10),
**caractérisé en ce que** :
- le boîtier (110) est équipé d'un ensemble d'au moins un interrupteur DIP.

2. Convertisseur (100) selon la revendication (1), dans lequel le boîtier (110) est équipé d'un ensemble d'au moins un fusible (160), accessibles manuellement depuis l'extérieur du boîtier (110).

3. Convertisseur (100) selon l'une quelconque des revendications précédentes, dans lequel la position d'un interrupteur DIP correspond à un type respectif de réfrigérateur, et dans lequel la position d'un autre interrupteur DIP correspond à un type respectif de batterie auxiliaire.

4. Convertisseur (100) selon l'une quelconque des revendications précédentes, comprenant un premier interrupteur (130), monté sur une ligne électrique configurée pour relier directement la batterie principale (20) et l'équipement accessoire (50) du véhicule automobile (10), sans passer par le dispositif de conversion de tension (150).

5. Convertisseur (100) selon l'une quelconque des revendications précédentes, comprenant un deuxième interrupteur (140), monté sur une ligne électrique configurée pour relier directement la batterie auxiliaire (30) et l'équipement accessoire (50) du véhicule automobile (10), sans passer par le dispositif de conversion de tension (150).

6. Convertisseur (100) selon l'une quelconque des revendications (4) ou (5), dans lequel au moins l'un parmi le premier interrupteur (130) et le deuxième interrupteur (140) est piloté par la valeur d'un signal (D+) représentatif de l'état de fonctionnement du moteur du véhicule automobile (10).

7. Convertisseur (100) selon l'une quelconque des revendications précédentes, dans lequel le boîtier (110) est exempt de ventilateur.

8. Véhicule automobile (10) comprenant un convertisseur (100) selon l'une quelconque des revendications précédentes, comprenant une batterie principale (20), une batterie auxiliaire (30), un alternateur (40), et un équipement électrique accessoire.

9. Véhicule automobile (10) selon la revendication 8, dans lequel l'équipement électrique accessoire est un réfrigérateur à gaz ou un réfrigérateur à compression.

10. Véhicule automobile (10) selon l'une quelconque des revendications 8 ou 9, comprenant en outre un convertisseur (100) courant alternatif / courant continu, relié électriquement au convertisseur (100) selon l'une quelconque des revendications 1 à 7.

## Patentansprüche

1. Gleichstrom-Gleichstrom-Spannungswandler (100) für ein Kraftfahrzeug (10), der Folgendes beinhaltet:
- ein Gehäuse (110),
- eine Spannungsumwandlungsvorrichtung (150),
- einen elektrischen Eingang, der dazu konfiguriert ist, mit der Hauptbatterie (20) des Kraftfahrzeugs (10) elektrisch verbunden zu sein, und die Stromversorgung der Spannungsumwandlungsvorrichtung (150) ermöglicht, wenn der Motor des Kraftfahrzeugs (10) in Betrieb ist,
- einen elektrischen Eingang, der dazu konfiguriert ist, mit einem Netz elektrisch verbunden zu sein, wenn der Motor des Kraftfahrzeugs (10) nicht in Betrieb ist, optional über einen Wechselstrom-Gleichstrom-Wandler (100),
- einen ersten elektrischen Ausgang, der dazu konfiguriert ist, mit der Hilfsbatterie (30) des Kraftfahrzeugs (10) elektrisch verbunden zu sein, und
- einen zweiten elektrischen Ausgang, der sich von dem ersten elektrischen Ausgang unterscheidet und dazu konfiguriert ist, mit einer elektrischen Zusatzausrüstung des Kraftfahrzeugs (10) elektrisch verbunden zu sein,
**dadurch gekennzeichnet, dass**:
- das Gehäuse (110) über einen Satz von mindestens einem DIP-Schalter verfügt.

2. Wandler (100) nach Anspruch (1), wobei das Gehäuse (110) über einen Satz von mindestens einer Sicherung (160) verfügt, der von der Außenseite des Gehäuses (110) aus manuell zugänglich ist.

3. Wandler (100) nach einem der vorhergehenden Ansprüche, wobei die Stellung eines DIP-Schalters einem jeweiligen Kühlschranktyp entspricht und wobei die Stellung eines anderen DIP-Schalters einem jeweiligen Hilfsbatterietyp entspricht.

4. Wandler (100) nach einem der vorhergehenden Ansprüche, beinhaltend einen ersten Schalter (130), der in eine elektrische Leitung eingebaut ist, die dazu konfiguriert ist, die Hauptbatterie (20) und die Zusatzausrüstung (50) des Kraftfahrzeugs (10) direkt zu verbinden, ohne dabei über die Spannungsumwandlungsvorrichtung (150) zu gehen.

5. Wandler (100) nach einem der vorhergehenden Ansprüche, beinhaltend einen zweiten Schalter (140), der in eine elektrische Leitung eingebaut ist, die dazu konfiguriert ist, die Hilfsbatterie (30) und die Zusatzausrüstung (50) des Kraftfahrzeugs (10) direkt zu verbinden, ohne dabei über die Spannungsumwandlungsvorrichtung (150) zu gehen.

6. Wandler (100) nach einem der Ansprüche (4) oder (5), wobei mindestens einer von dem ersten Schalter (130) und dem zweiten Schalter (140) durch den Wert eines Signals (D+) gesteuert wird, das für den Betriebszustand des Motors des Kraftfahrzeugs (10) repräsentativ ist.

7. Wandler (100) nach einem der vorhergehenden Ansprüche, wobei das Gehäuse (110) keinen Lüfter besitzt.

8. Kraftfahrzeug (10), das einen Wandler (100) nach einem der vorhergehenden Ansprüche beinhaltet, beinhaltend eine Hauptbatterie (20), eine Hilfsbatterie (30), eine Lichtmaschine (40) und eine elektrische Zusatzausrüstung.

9. Kraftfahrzeug (10) nach Anspruch 8, wobei die elektrische Zusatzausrüstung ein gasbetriebener Kühlschrank oder ein Kompressionskühlschrank ist.

10. Kraftfahrzeug (10) nach einem der Ansprüche 8 oder 9, ferner beinhaltend einen Wechselstrom-Gleichstrom-Wandler (100), der mit dem Wandler (100) nach einem der Ansprüche 1 bis 7 elektrisch verbunden ist.

## Claims

1. DC/DC voltage converter (100), for a motor vehicle (10), comprising:
- a housing (110),
- a voltage conversion device (150),
- an electrical input, configured to be electrically connected to the main battery (20) of the motor vehicle (10), and making it possible to supply current to the voltage conversion device (150) when the engine of the motor vehicle (10) is running,
- an electrical input, configured to be electrically connected to the mains when the engine of the motor vehicle (10) is not running, optionally via an AC/DC converter (100),
- a first electrical output, configured to be electrically connected to the auxiliary battery (30) of the motor vehicle (10), and
- a second electrical output, distinct from the first electrical output, and configured to be electrically connected to an ancillary electrical apparatus of the motor vehicle (10),
**characterized in that**:
- the housing (110) is equipped with a set of at least one DIP switch.

2. Converter (100) according to Claim 1, wherein the housing (110) is equipped with a set of at least one fuse (160), which may be accessed manually from outside the housing (110).

3. Converter (100) according to either one of the preceding claims, wherein the position of one DIP switch corresponds to a respective type of refrigerator, and wherein the position of another DIP switch corresponds to a respective type of auxiliary battery.

4. Converter (100) according to any one of the preceding claims, comprising a first switch (130), mounted on an electrical line configured to directly connect the main battery (20) and the ancillary apparatus (50) of the motor vehicle (10), without passing through the voltage conversion device (150).

5. Converter (100) according to any one of the preceding claims, comprising a second switch (140), mounted on an electrical line configured to directly connect the auxiliary battery (30) and the ancillary apparatus (50) of the motor vehicle (10), without passing through the voltage conversion device (150).

6. Converter (100) according to either one of Claims 4 and 5, wherein at least one out of the first switch (130) and the second switch (140) is controlled by the value of a signal (D+) representative of the operating state of the engine of the motor vehicle (10).

7. Converter (100) according to any one of the preceding claims, wherein the housing (110) is fanless.

8. Motor vehicle (10) comprising a converter (100) according to any one of the preceding claims, comprising a main battery (20), an auxiliary battery (30), an alternator (40) and an ancillary electrical apparatus.

9. Motor vehicle (10) according to Claim 8, wherein the ancillary electrical apparatus is a gas refrigerator or a compressor refrigerator.

10. Motor vehicle (10) according to either one of Claims 8 and 9, further comprising an AC/DC converter (100) electrically connected to the converter (100) according to any one of Claims 1 to 7.
